# EUROPEAN PATENT APPLICATION

(11) **EP 3 779 319 A1**
(43) Date of publication of application: **17.02.2021**
(21) Application number: 18917926.0
(22) Date of filing: 25.10.2018
(51) Int. Cl.: F24F 13/30, F24F 11/52, F24F 11/89, F24F 13/32

(54) **INDOOR AIR CONDITIONER INSTALLATION DIRECTION DISPLAY DEVICE**

(30) Priority: 10.05.2018 JP 2018091053
(71) Applicant: Mitsubishi Electric Corporation, Tokyo 100-8310 (JP)
(72) Inventor: SATO, Fuyuki, Tokyo 1008310 (JP); FUKUOKA, Naoya, Tokyo 1008310 (JP); UKIANA, Tomooki, Tokyo 1008310 (JP); TOMITA, Satoko, Tokyo 1000006 (JP); NAKAJIMA, Yoshinori, Tokyo 1000006 (JP); KOMATSU, Kazuhiro, Tokyo 1000006 (JP)
(74) Representative: Pfenning, Meinig & Partner mbB
(86) International application number: PCT/JP2018/039652
(87) International publication number: WO 2019/215943

(57) **Abstract**

The present invention includes a temperature measurement unit that measures temperatures of a plurality of vents (18) that can be visually recognized from outside of a decorative panel; and a display unit (36) that displays each of the vents (18) measured by the temperature measurement unit on a thermogram (38) in a color pattern corresponding to a temperature of each of the vents, and thereby displays, as an installation direction of an indoor air-conditioning unit and by a direction indication (42), a direction derived from an installation position (18a) of a vent displayed in a highest-temperature color pattern and an installation position (18d) of a vent displayed in a lowest-temperature color pattern.

## Description

### Technical Field

The present invention relates to an indoor air-conditioning unit installation direction display device that is used for maintenance and the like of an indoor unit (indoor air-conditioning unit), which is attached to the ceiling or the like, of an air conditioner.

### Background Art

Air conditioners used for air conditioning are used in large business buildings and the like.

An indoor unit of an air conditioner (indoor air-conditioning unit) has a main body housing that houses a fan, a heat exchanger, and so on and is embedded in the ceiling or the like, and in many models the main body housing is covered with a decorative panel in which vanes that can be opened and closed are provided at vents arranged in four directions.

### Citation List

### Patent Literature

Patent Literature 1: JP 2012-83077 A

### Summary of Invention

### Technical Problem

When maintenance is performed on the indoor air-conditioning unit or work to add a new system to the indoor air-conditioning unit is performed, it is necessary to know the position and direction of piping extending from the indoor air-conditioning unit to a duct or wiring provided above the ceiling. The position and direction of the duct or wiring are related to an installation direction of the indoor air-conditioning unit, so that the installation direction of the indoor air-conditioning unit needs to be known in order to know the position and direction of the duct or wiring.

In the indoor air-conditioning unit, however, the main body housing is covered with the decorative panel that is shaped symmetrically in four directions, so that it is often impossible to determine the installation direction of the indoor air-conditioning unit based only on appearance from the outside.

Therefore, an operator climbs to the ceiling using a stepladder or the like, removes the decorative panel, and checks the internal structure of the indoor air-conditioning unit so as to check the installation direction of the indoor air-conditioning unit.

Such work is dangerous and inefficient for the operator. A problem is that such work is an obstacle to efficiently performing maintenance on the indoor air-conditioning unit or performing design work and attachment work for installing a new unit in the indoor air-conditioning unit.

### Solution to Problem

The invention of the present application is related to an indoor air-conditioning unit installation direction display device that can determine an installation direction of an indoor air-conditioning unit without removing a decorative panel.

An indoor air-conditioning unit installation direction display device according to the present invention displays an installation direction of an indoor air-conditioning unit in which a plurality of vents are provided at positions that can be visually recognized from outside of a decorative panel. The indoor air-conditioning unit installation direction display device includes a temperature measurement unit to measure temperatures of the plurality of vents; and a display unit to display each of the vents measured by the temperature measurement unit in a color pattern corresponding to a temperature of each of the vents, and thereby to display, as the installation direction of the indoor air-conditioning unit, a direction derived from an installation position of one of the vents that is displayed in a highest-temperature color pattern and an installation position of one of the vents that is displayed in a lowest-temperature color pattern.

### Advantageous Effects of Invention

An indoor air-conditioning unit installation direction display device according to the present invention is arranged as described above, so that it is possible to determine extension directions of a liquid pipe and a gas pipe that extend from a heat exchanger housed in an indoor air-conditioning unit to an outdoor unit, which cannot be visually recognized from the outside, based on an installation position of a vent displayed in a highest-temperature color pattern and an installation position of a vent displayed in a lowest-temperature color pattern, which can be visually recognized from the outside. In addition, the indoor air-conditioning unit installation direction display device allows an installation direction of the indoor air-conditioning unit to be checked without removing a decorative panel. Therefore, an effect of the indoor air-conditioning unit installation direction display device is that work can be performed efficiently when maintenance is performed or a new unit is additionally installed.

### Brief Description of Drawings

Fig. 1 is a bottom perspective view of a general indoor air-conditioning unit when viewed from below;
Fig. 2 is an external view of the general indoor air-conditioning unit;
Fig. 3 is a diagram illustrating an example of usage in which an image of a temperature measurement target object is captured using an indoor air-conditioning unit installation direction display device according to a first embodiment of the present invention;
Fig. 4 is a diagram illustrating an example of display in the indoor air-conditioning unit installation direction display device according to the first embodiment of the present invention;
Fig. 5 is a functional block diagram for performing signal processing of the indoor air-conditioning unit installation direction display device according to the first embodiment of the present invention;
Fig. 6 is a flowchart for performing signal processing of the indoor air-conditioning unit installation direction display device according to the first embodiment of the present invention;
Fig. 7 is a diagram illustrating an example of usage in which an image of a temperature measurement target object is captured using an indoor air-conditioning unit installation direction display device according to a second embodiment of the present invention;
Fig. 8 is a diagram illustrating an example of acquisition of ID numbers using an indoor air-conditioning unit installation direction display device according to a fourth embodiment of the present invention;
Fig. 9 is a diagram illustrating an example of acquisition of ID numbers using the indoor air-conditioning unit installation direction display device according to the fourth embodiment of the present invention;
Fig. 10 is a diagram illustrating an example of acquisition of ID numbers using the indoor air-conditioning unit installation direction display device according to the fourth embodiment of the present invention;
Fig. 11 is a diagram illustrating an example of acquisition of ID numbers using the indoor air-conditioning unit installation direction display device according to the fourth embodiment of the present invention;
Fig. 12 is a diagram illustrating an example of acquisition of ID numbers using the indoor air-conditioning unit installation direction display device according to the fourth embodiment of the present invention;
Fig. 13 is a functional block diagram of the indoor air-conditioning unit installation direction display device according to the fourth embodiment of the present invention;
Fig. 14 is a flowchart illustrating a procedure for acquiring ID numbers using the indoor air-conditioning unit installation direction display device according to the fourth embodiment of the present invention;
Fig. 15 is a diagram illustrating an example of usage of an indoor air-conditioning unit installation direction display device according to a fifth embodiment of the present invention;
Fig. 16 is a diagram illustrating an example of display in the indoor air-conditioning unit installation direction display device according to the fifth embodiment of the present invention;
Fig. 17 is a control block diagram of the indoor air-conditioning unit installation direction display device according to the fifth embodiment of the present invention; and
Fig. 18 is a flowchart illustrating a procedure for acquiring ID numbers using the indoor air-conditioning unit installation direction display device according to the fifth embodiment of the present invention.

### Description of Embodiments

### (General Air Conditioner)

An indoor unit of a general air conditioner (indoor air-conditioning unit) will be described with reference to the drawings.

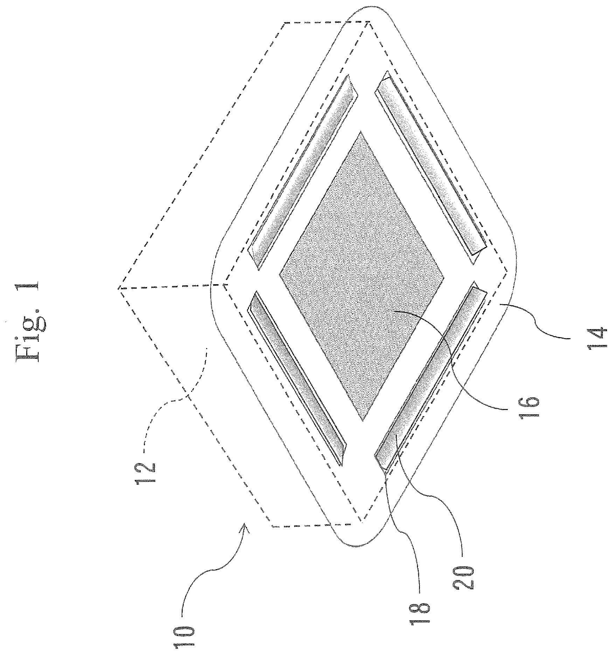

Fig. 1 is a bottom perspective view of a general indoor air-conditioning unit when viewed from below.

In Fig. 1, an indoor air-conditioning unit 10 is composed of a main body housing 12 of the indoor air-conditioning unit 10, which is buried above the ceiling, and a decorative panel 14 that covers an opening that opens from the bottom of the main body housing 12 to the inside of a room. The air in the room drawn in from an inlet grill 16 is cooled or heated in the main body housing 12 and is blown out into the room from vents 18 provided in four directions. A vane 20 that can be opened and closed to adjust an air flow direction is provided at each of the vents 18.

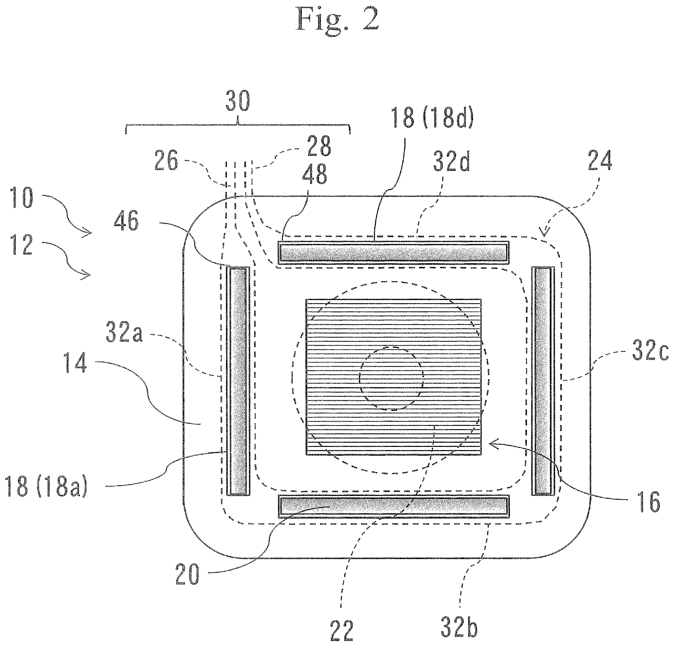

Fig. 2 is an external view of a general indoor air-conditioning unit, and is an external view of the general indoor air-conditioning unit described in Fig. 1 when viewed from directly below. Behind the decorative panel 14, a fan 22 indicated by dotted lines is provided in the center of the main body housing 12, and a heat exchanger 24 indicated by dotted lines is provided.

The fan 22 is rotated by a motor (not illustrated) and thereby draws in the air in the room from the inlet grill 16 and diffuses the air radially toward the vents 18.

The heat exchanger 24 is an approximately C-shaped pipe and is arranged along the four vents 18 inside the main body housing 12. One end of the heat exchanger 24 extends above the ceiling, which is the outside of the main body housing 12, via a gas pipe 26, and the other end of the heat exchanger 24 extends above the ceiling, which is the outside of the main body housing 12, via a liquid pipe 28. The gas pipe 26 and the liquid pipe 28 are arranged in proximity to each other. The gas pipe 26 and the liquid pipe 28 may hereinafter be referred to collectively as "piping 30". The gas pipe 26 and the liquid pipe 28 are connected to pipes (not illustrated) above the ceiling, and the pipes extend toward an outdoor unit (not illustrated) through ducts (not illustrated) and are connected with the outdoor unit via the ducts.

A refrigerant is fed into the inside of the heat exchanger 24. When the air conditioner functions as a cooling unit, a liquid refrigerant is supplied from the liquid pipe 28 to the heat exchanger 24. While the liquid refrigerant is fed sequentially through passages 32d, 32c, 32b, and 32a of the heat exchanger 24, the liquid refrigerant absorbs heat of the air diffused from the fan 22, so that the liquid refrigerant makes a phase transition to a gas refrigerant, and the gas refrigerant is delivered to the gas pipe 26. The gas refrigerant is delivered from the gas pipe 26 to the pipe in the duct and is further delivered to the outdoor unit.

When the air conditioner functions as a heating unit, a gas refrigerant is supplied from the gas pipe 26 to the heat exchanger 24. While the gas refrigerant is fed sequentially through the passages 32a, 32b, 32c, and 32d of the heat exchanger 24, heat of the gas refrigerant is absorbed by the air diffused from the fan 22, so that the gas refrigerant makes a phase transition to a liquid refrigerant, and the liquid refrigerant is delivered to the liquid pipe 28. The liquid refrigerant is delivered from the liquid pipe 28 to the pipe in the duct and is further delivered to the outdoor unit.

### (First Embodiment)

### (Indoor Air-Conditioning Unit Installation Direction Display Device)

An indoor air-conditioning unit installation direction display device according to a first embodiment of the present invention will be described hereinafter.

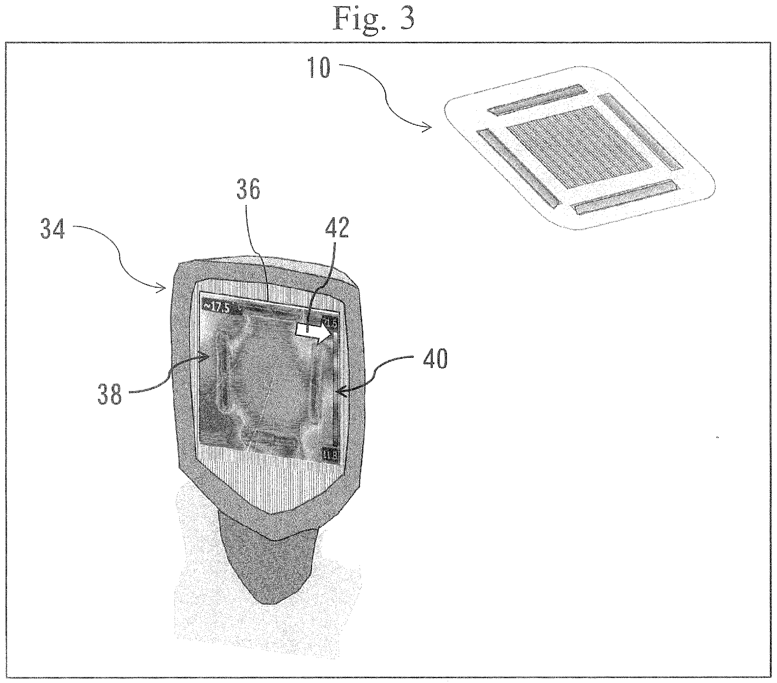

Fig. 3 is a diagram illustrating an example of usage in which an image of a temperature measurement target object is captured using the indoor air-conditioning unit installation direction display device according to the first embodiment of the present invention.

In Fig. 3, an indoor air-conditioning unit installation direction display device (thermographic camera) 34 is a camera that receives infrared rays radiated from the temperature measurement target object by a sensor (not illustrated) built in the thermographic camera 34, converts the infrared rays into an electrical signal, and measures a temperature distribution of the temperature measurement target object based on the amount of energy of the infrared rays. The thermographic camera 34 extracts color information from the received infrared rays, and displays a captured image in color as a thermogram 38 on a display unit 36.

The thermographic camera 34 includes, in appearance, at least an operation unit (not illustrated), a light-receiving unit that receives infrared rays radiated from the temperature measurement target object or receives reflected waves of emitted infrared rays reflected at the temperature measurement target object, and the display unit 36 that displays the thermogram 38. The thermographic camera 34 may optionally further include a light-emitting unit that can emit visible light and infrared light. The thermographic camera 34 is of a hand-held type so that an operator can use the thermographic camera 34 while holding it by hand and directing the light-emitting unit and the light-receiving unit at the temperature measurement target object.

In all the embodiments, the light-emitting unit and the light-receiving unit function collectively as an imaging unit.

However, in addition to the hand-held type, other forms of the thermographic camera 34 can be selected as appropriate, such as a rectangular parallelepiped camera type and a smartphone type to be described later.

In Fig. 3, when the operator holds the thermographic camera 34 by hand and directs the light-receiving unit (not illustrated) at the indoor air-conditioning unit 10, which is the temperature measurement target object, and infrared rays are received, a thermographic image of the indoor air-conditioning unit 10 is displayed on the display unit 36 as the thermogram 38.

On the display unit 36, a temperature graph 40 indicating the correspondence between colors of the thermogram 38 and temperatures is displayed together with the thermogram 38. Therefore, the operator can check the colors of the thermogram 38 against the temperature graph 40 and recognize an approximate temperature of each portion of the indoor air-conditioning unit 10.

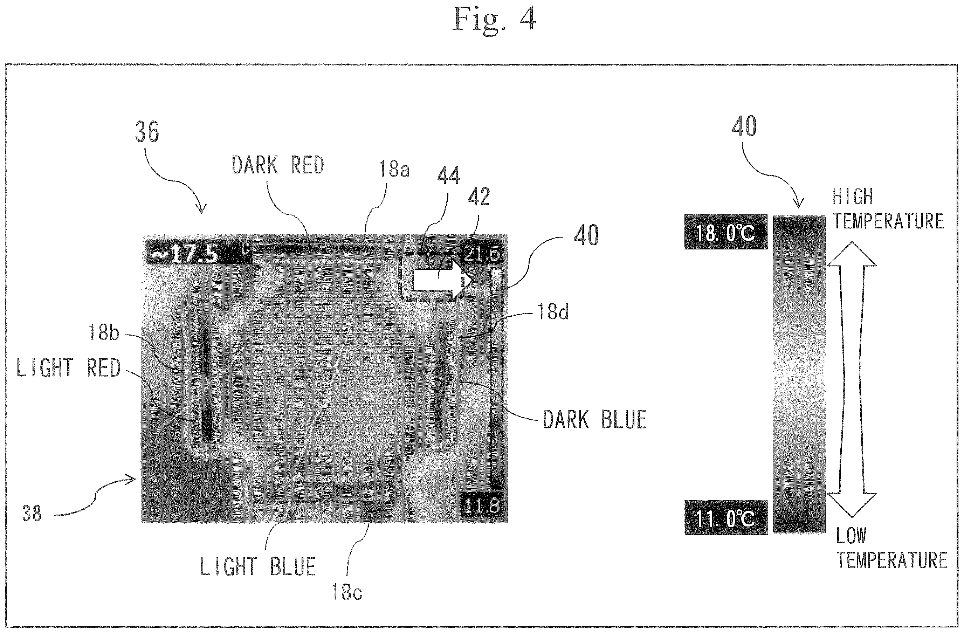

As will be described later, a direction indication 42 that indicates a direction in which the piping 30 of the indoor air-conditioning unit 10 extends from the main body housing 12 of the indoor air-conditioning unit 10 to the outside above the ceiling can be displayed on the display unit 36 by being superimposed over the thermogram 38. Alternatively, as will be described later in Fig. 4, a position where the piping 30 is installed can also be displayed on the display unit 36.

This allows the operator to recognize an extension direction or installation position of the piping 30 of the indoor air-conditioning unit 10 and determine and check an attachment direction, installation direction, or installation position of the indoor air-conditioning unit 10.

Fig. 4 is a diagram illustrating an example of display in the indoor air-conditioning unit installation direction display device according to the first embodiment of the present invention, and is an enlarged detailed view of the display unit 36 of the thermographic camera 34 described in Fig. 3.

In Fig. 4, the thermogram 38 and the temperature graph 40 are displayed on the display unit 36. In the temperature graph 40, 11°C to 18°C are displayed with each temperature being displayed in a corresponding color, as an example. In the temperature graph 40, the temperature changes from low to high in the order of dark blue, light blue, light red, and dark red. However, the correspondence between and combinations of temperatures and colors may be designed as appropriate.

In the thermogram 38 of Fig. 4, the temperatures of the vanes 20 respectively provided at the four vents 18 of the indoor air-conditioning unit 10 and the temperatures of the air blown out from the vents 18 are displayed in colors corresponding to the respective temperatures.

As described with reference to Fig. 2, when the air conditioner functions as the cooling unit, for example, a gas refrigerant is supplied from the gas pipe 26 to the heat exchanger 24. While the gas refrigerant is fed sequentially through the passages 32a, 32b, 32c, and 32d, the gas refrigerant absorbs heat of the air diffused from the fan 22, thereby gradually changing from high temperature to low temperature and making a phase transition to a liquid refrigerant, and is delivered to the liquid pipe 28 as the liquid refrigerant.

Therefore, in Fig. 4, a vent 18a is displayed in dark red, a vent 18b is displayed in light red, a vent 18c is displayed in light blue, and a vent 18d is displayed in dark blue. That is, it can be seen that the temperatures vary from low to high in the order of the vent 18a, the vent 18b, the vent 18c, and the vent 18d, so that it is possible to visually recognize from the outside that the vent 18a has the highest temperature and the vent 18d has the lowest temperature.

Based on this, it can be seen that in Fig. 2 the piping 30, which cannot be visually recognized from the outside, extends from the main body housing 12 of the indoor air-conditioning unit 10 to the outside above the ceiling at a portion where an end 46 of the vent 18a and an end 48 of the vent 18d are in proximity to each other. The operator can thus determine the attachment direction, installation direction, or installation position of the indoor air-conditioning unit 10.

At this time, the direction in which the piping 30 extends from the main body housing 12 of the indoor air-conditioning unit 10 to the outside above the ceiling may be displayed using the direction indication 42, as illustrated in Fig. 4. Alternatively, the position where the piping 30 is installed may be indicated using a position indication 44 indicated by a dotted box.

This allows the operator to more clearly know the extension direction or installation position of the piping 30 and clearly determine the attachment direction, installation direction, or installation position of the indoor air-conditioning unit 10.

### (Signal Processing)

Signal processing of the indoor air-conditioning unit installation direction display device according to the present invention will now be described with reference to the drawings.

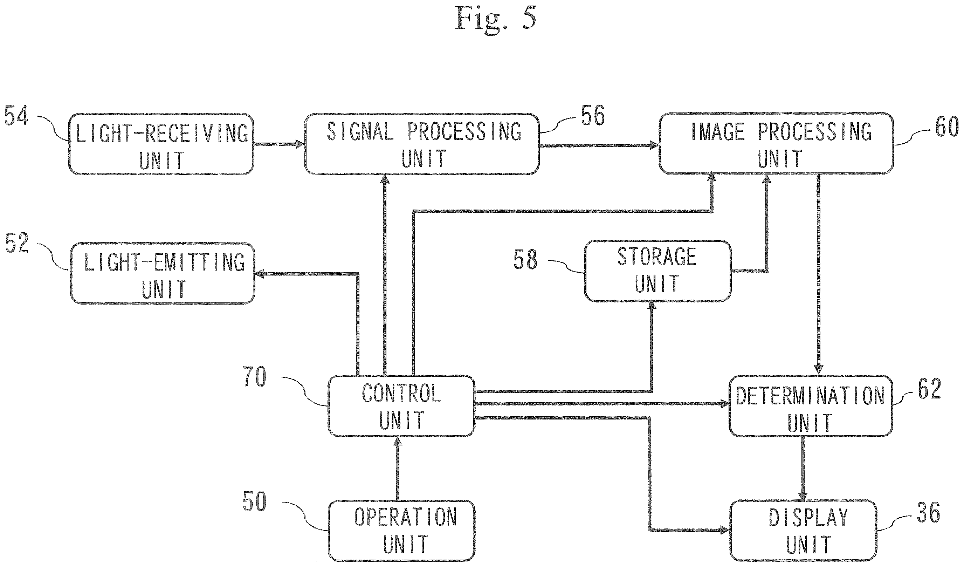

Fig. 5 is a functional block diagram for performing signal processing of the indoor air-conditioning unit installation direction display device according to the first embodiment of the present invention.

An operation unit 50, a light-emitting unit 52, a light-receiving unit 54, a signal processing unit 56, a storage unit 58, an image processing unit 60, a determination unit 62, and a control unit 70 that are illustrated in Fig. 5 constitute a temperature measurement unit in all the embodiments. In addition to these components, the display unit 36 is included.

When the operator operates the operation unit 50 of the thermographic camera 34 (Fig. 3) and performs an operation to start measurement of the temperature of the indoor air-conditioning unit 10 (Fig. 3), which is a temperature measurement target object, an operation signal is sent to the control unit 70, and the control unit 70 activates the light-emitting unit 52.

The light-emitting unit 52 is equipped with a visible light lamp that can emit visible light and an infrared light lamp that can emit infrared light. The light-emitting unit 52 directs the visible light lamp and the infrared light lamp at the indoor air-conditioning unit 10, which is the temperature measurement target object, individually through operations on the operation unit 50 by the operator. This causes visible light and infrared light to be emitted to the indoor air-conditioning unit 10. However, depending on the type of the thermographic camera 34, infrared rays radiated from the temperature measurement target object may only be received by the light-receiving unit 54 to be described later, so that the light-emitting unit 52 is not an essential component.

The light-receiving unit 54 is a camera equipped with a lens or the like that receives infrared rays radiated from the indoor air-conditioning unit 10 or receives reflected visible light and reflected infrared light of visible light and infrared light emitted by the light-emitting unit 52.

The control unit 70 activates the signal processing unit 56. The signal processing unit 56 performs photoelectric conversion on the infrared light received by the light-receiving unit 54 using a charge coupled device (CCD) sensor or the like, and converts the amount of energy of the infrared light into electrical energy and outputs the electrical energy.

The storage unit 58 stores the positional relationship of the four vents 18 (Fig. 2) in the indoor air-conditioning unit 10, and also stores the amount of electrical energy corresponding to the amount of energy of the infrared light output by the signal processing unit 56, temperature information, and color information in association with one another.

The control unit 70 calls up the above-described pieces of information from the storage unit 58 and activates the image processing unit 60. Based on the amount of electrical energy output by the signal processing unit 56 and the pieces of information called up from the storage unit 58, the image processing unit 60 generates a thermographic image by superimposing an infrared image of the indoor air-conditioning unit 10, which is the temperature measurement target object, and a color image based on temperatures. Then, the image processing unit 60 outputs the thermographic image together with the temperature graph 40 (Fig. 4).

The control unit 70 activates the determination unit 62. The determination unit 62 determines the vent 18a having the highest temperature and the vent 18d having the lowest temperature, as illustrated in Fig. 4, based on the positional relationship of the four vents 18 in the indoor air-conditioning unit 10 stored in the storage unit 58 and information in the thermographic image output by the image processing unit 60. Then, the determination unit 62 outputs information on the direction indication 42, which is the direction in which the piping 30 extends, or information on the position indication 44 indicating the position of the piping 30.

The display unit 36 is made of liquid crystal or the like. The display unit 36 combines the thermographic image and the temperature graph 40 that are output by the image processing unit 60 and the direction indication 42 or the position indication 44 output by the determination unit 62, and displays the thermogram 38 on a liquid crystal screen.

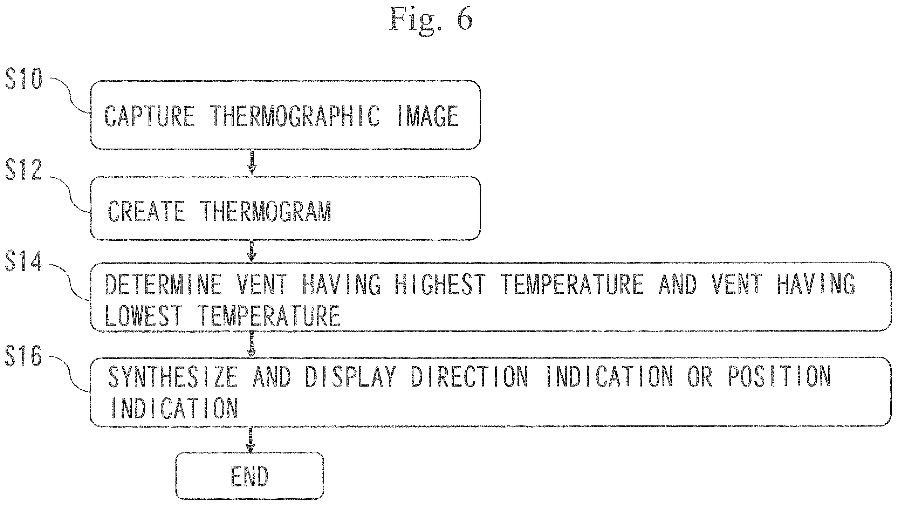

Fig. 6 is a flowchart for performing signal processing of the indoor air-conditioning unit installation direction display device according to the first embodiment of the present invention.

In S10, the operator operates the operation unit 50 of the thermographic camera 34 and directs the thermographic camera 34 at the indoor air-conditioning unit 10 on the ceiling. Then, infrared rays are received by the light-receiving unit 54 of an infrared camera and a thermographic image is captured.

In S12, the control unit 70 activates the signal processing unit 56 and the image processing unit 60. The signal processing unit 56 converts the infrared rays into an electrical signal based on the amount of energy of the received infrared rays. The image processing unit 60 creates the thermogram 38 based on the relationship between the amount of energy of infrared rays and color information stored in the storage unit 58.

In S14, the control unit 70 activates the determination unit 62. The determination unit 62 determines the vent 18a having the highest temperature and the vent 18d having the lowest temperature, based on information in the thermogram 38 received from the image processing unit 60 and the positional relationship of the four vents 18 in the indoor air-conditioning unit 10 stored in the storage unit 58. Then, the determination unit 62 outputs information on the direction indication 42, which is the direction in which the piping 30 extends, or information on the position indication 44 indicating the position of the piping 30.

In S16, the control unit 70 activates the display unit 36. The display unit 36 combines the thermographic image and the temperature graph 40 that are output by the image processing unit 60 and the direction indication 42 or the position indication 44 output by the determination unit 62, and displays the thermogram 38 on the liquid crystal screen of the thermographic camera 34.

The above completes the processing flow.

### (Second Embodiment)

An indoor air-conditioning unit installation direction display device according to a second embodiment of the present invention will now be described.

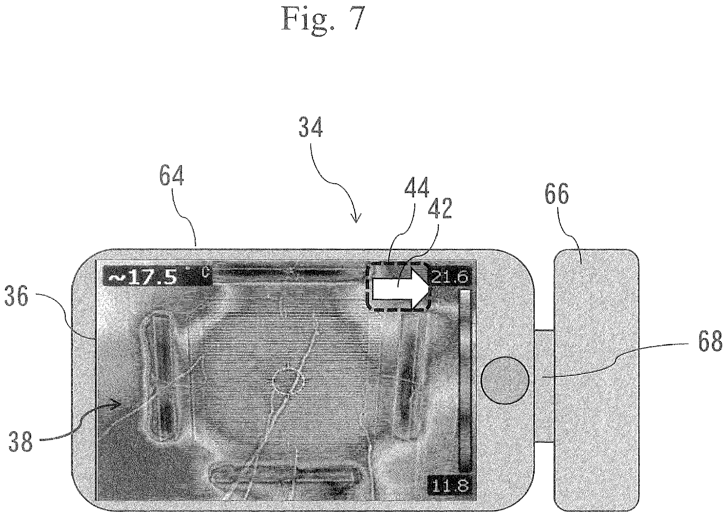

Fig. 7 is a diagram illustrating an example of usage in which an image of a temperature measurement target object is captured using the indoor air-conditioning unit installation direction display device according to the second embodiment of the present invention.

Fig. 7 is an example in which the thermographic camera 34 is constituted by a smartphone 64. The smartphone 64 can be connected with an infrared camera 66 via a connection terminal 68. By selecting an infrared camera icon (not illustrated) displayed on the display unit 36 of the smartphone 64, software of a visible light camera (not illustrated) or the infrared camera 66 installed in the smartphone 64 is activated. Then, the thermogram 38 is displayed on the display unit 36, as in the case of the thermographic camera 34 of the hand-held type of Fig. 3.

The smartphone 64 itself may be equipped with an infrared camera function.

The method for determining the installation direction or installation position of the indoor air-conditioning unit 10 (Fig. 1), the signal processing configuration, and the flowchart of the control procedure are adapted from those of the first embodiment.

With this arrangement, it is not necessary to purchase the thermographic camera 34, which is expensive. The operator is only required to install an application of the infrared camera function in the smartphone 64, which is commonly used, and attach the infrared camera 66, which is inexpensive, to the smartphone 64. When the smartphone 64 itself has the function of the infrared camera 66, usability is further enhanced.

When the operator selects the icon displayed on the display unit 36 of the smartphone 64, this activates the infrared camera 66, and the thermogram 38 as well as the direction indication 42 or the position indication 44 are displayed on the display unit 36. Therefore, the operator can recognize the direction in which the piping 30 extends or the installation position of the piping 30, and can clearly determine the attachment direction, installation direction, or installation position of the indoor air-conditioning unit 10.

### (Third Embodiment)

An indoor air-conditioning unit installation direction display device according to a third embodiment of the present invention will now be described.

The indoor air-conditioning unit installation direction display device according to the third embodiment of the present invention is such that the thermographic camera 34 described in the first embodiment is equipped with a visible light camera and an infrared camera, or the infrared camera 66 is connected to the smartphone 64 equipped with a visible light camera. The indoor air-conditioning unit installation direction display device superimposes a thermographic image processed based on infrared rays received by the thermographic camera 34 or the infrared camera 66 over a visible light image captured by the visible light camera. Then, the indoor air-conditioning unit installation direction display device can display an image obtained by superimposing the thermographic image over the visible light image on the display unit 36 as an augmented reality (AR) image.

To create an AR image, the positions of the vents 18, the vanes 20, and the piping 30 of the indoor air-conditioning unit 10 illustrated in Fig. 2 are stored as markers in the storage unit 58 (Fig. 5) of the thermographic camera 34 or the smartphone 64. Then, a thermographic image captured by the thermographic camera 34 or the infrared camera 66 connected to the smartphone 64 is superimposed over a visible light image captured by the thermographic camera 34 or the visible light camera included in the smartphone 64.

With this arrangement, the thermogram 38 of each part of the indoor air-conditioning unit 10, the temperature graph 40, and the direction indication 42 or the position indication 44 illustrated in Fig. 4 can be displayed on a visualized image of the indoor air-conditioning unit 10 so as to look as if they were protruding.

### (Fourth Embodiment)

An indoor air-conditioning unit installation direction display device according to a fourth embodiment of the present invention will now be described.

In the indoor air-conditioning unit installation direction display device according to the fourth embodiment of the present invention, an ID number of each of a plurality of indoor air-conditioning units 10, a thermo ON/OFF state of each of the indoor air-conditioning units 10, and a combination of open/closed states of the vanes 20 of the four vents 18 are stored in association with one another in the storage unit 58 (Fig. 5) as a table. While each of the indoor air-conditioning units 10 is operating, the indoor air-conditioning unit installation direction display device captures an image of the thermo ON/OFF state of each of the indoor air-conditioning units 10 by an infrared camera, and captures an image of a combination of the open/closed states of the vanes 20 of the four vents 18 by a visible light camera. Then, the indoor air-conditioning unit installation direction display device checks the thermo ON/OFF state and the combination of the open/closed states of the vanes 20 against a table 72 in the storage unit 58, and thereby acquires an ID number of each of the indoor air-conditioning units 10.

In the following, description will be provided using the thermographic camera 34 having the visible light camera function as described in Fig. 3. However, the following description is applicable also to the smartphone 64 to which the infrared camera 66 is attached as described in Fig. 7, or the smartphone 64 equipped with the infrared camera function.

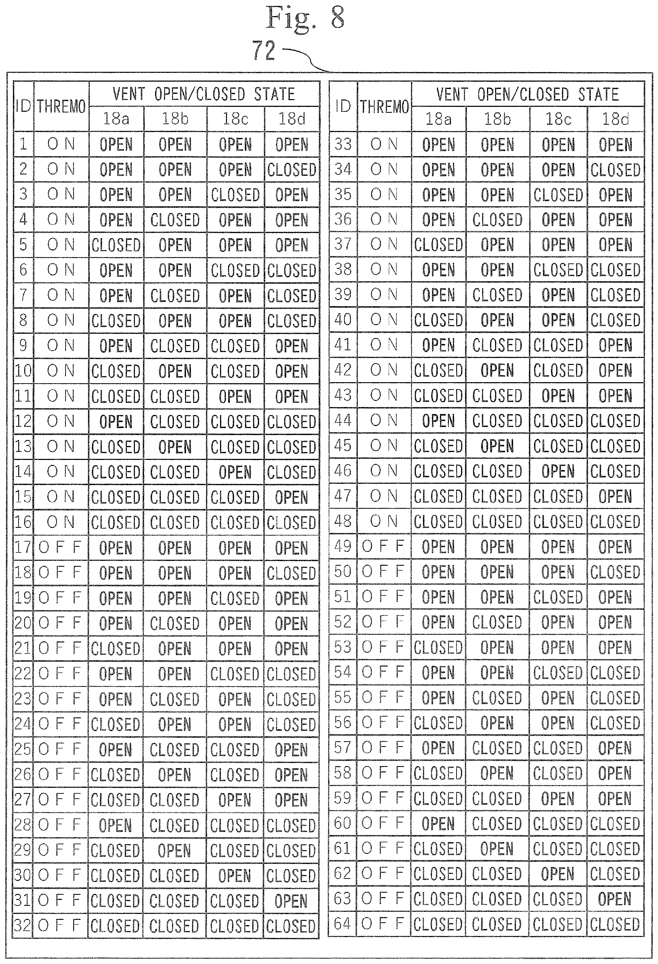

Figs. 8 to 12 are diagrams illustrating examples of acquirement of ID numbers using the indoor air-conditioning unit installation direction display device according to the fourth embodiment of the present invention.

Fig. 8 is an example of the table 72, in which an ID number of the indoor air-conditioning unit 10, a thermo state, and open/closed states of the vanes 20 of the four vents 18 are associated with one another. The table 72 is stored in the storage unit 58 (Fig. 5).

The thermo state indicates whether each of the indoor air-conditioning units 10 is in a thermo ON state (cooling/heating operating state) or a thermo OFF state (cooling/heating non-operating state, fan state), and has two types, ON and OFF.

The open/closed states of the vanes 20 of the four vents 18 are a combination of the open/closed states of the vents 18a, 18b, 18c, and 18d (Fig. 4). The open/closed states of the vanes 20 of the four vents 18 include two states, open and closed, and four states corresponding to the vents 18a, 18b, 18c, and 18d, so that there are 16 combinations (two to the fourth power).

Therefore, the indoor air-conditioning units 10 can be distinguished by a maximum of 32 (= 2 × 16) ID numbers based on two types of thermo states and 16 types of open/closed states.

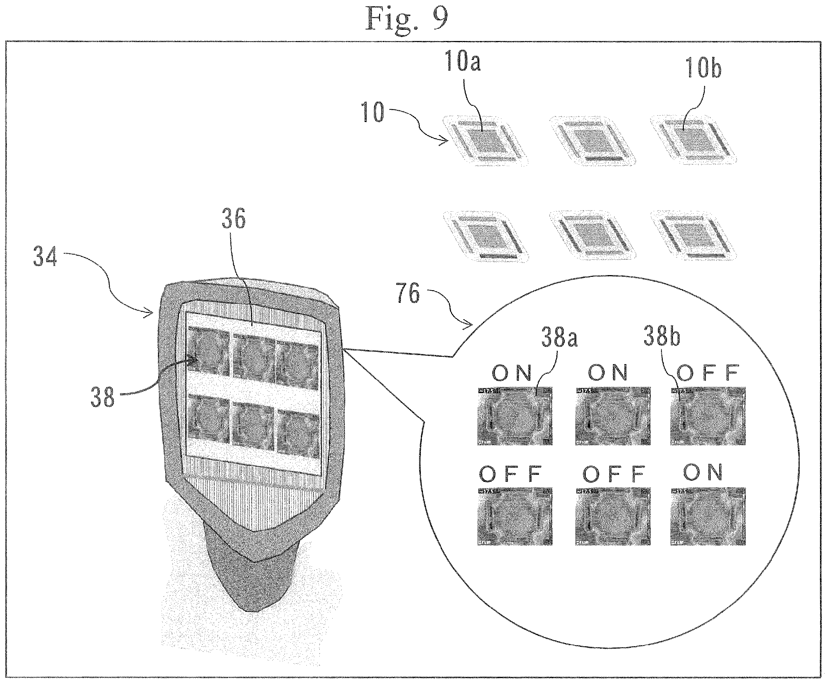

Fig. 9 is a diagram illustrating a state in which an image of the indoor air-conditioning units 10 on the ceiling is captured by the thermographic camera 34. Only the infrared camera function (not illustrated) of the thermographic camera 34 is used here.

A large number of indoor air-conditioning units 10 can be installed on the ceiling. For convenience of description, however, six indoor air-conditioning units 10 are targeted here.

The operator directs the infrared camera of the thermographic camera 34 at the indoor air-conditioning units 10 on the ceiling and captures a thermographic image. A balloon 76 is an enlarged view of the display unit 36 of the thermographic camera 34, and the thermograms 38 of the six indoor air-conditioning units 10 are displayed. In each of the thermograms 38 of the indoor air-conditioning units 10, the thermo ON or OFF state is additionally displayed together with the thermogram 38 of the vents 18 (18a, 18b, 18c, and 18d) of the indoor air-conditioning unit 10, as described in Fig. 4 of the first embodiment. The relationship between color information of the thermogram 38 and the thermo ON/OFF state is stored in the storage unit 58 (Fig. 5).

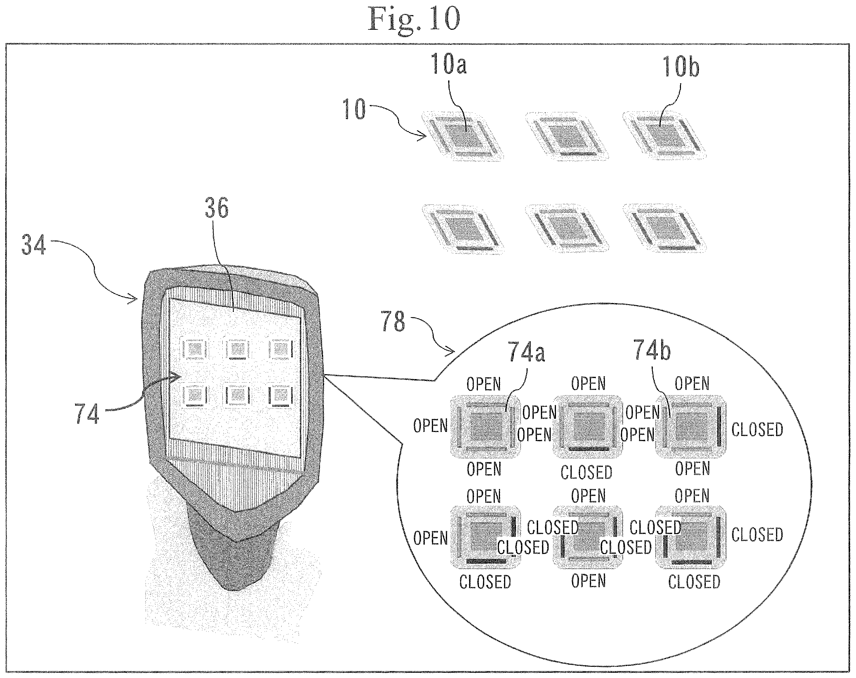

Fig. 10 is a diagram illustrating a state in which an image of the indoor air-conditioning units 10 on the ceiling is captured by the thermographic camera 34. Only the visible light camera function (not illustrated) of the thermographic camera 34 is used here.

The operator directs the visible light camera of the thermographic camera 34 at the indoor air-conditioning units 10 on the ceiling and captures a visible light image. A balloon 78 is an enlarged view of the display unit 36 of the thermographic camera 34, and visible images 74 of the six indoor air-conditioning units 10 are displayed. In the visible image 74 of each of the indoor air-conditioning units 10, the open/closed states of the vent 18a, the vent 18b, the vent 18c, and the vent 18d are additionally displayed together with the visible image 74 of the open/closed states (gray indicating the open state and black indicating the closed state) of the vanes 20 of the vents 18 (18a, 18b, 18c, and 18d) of the indoor air-conditioning unit. A text image of "open" is added to the vent 18 with the vane 20 in the open state, and a text image of "closed" is added to the vent 18 with the vane 20 in the closed state. The relationship between the visible image 74 of the vane 20 and "open"/"closed" of the open/closed state is stored in the storage unit 58 (Fig. 5).

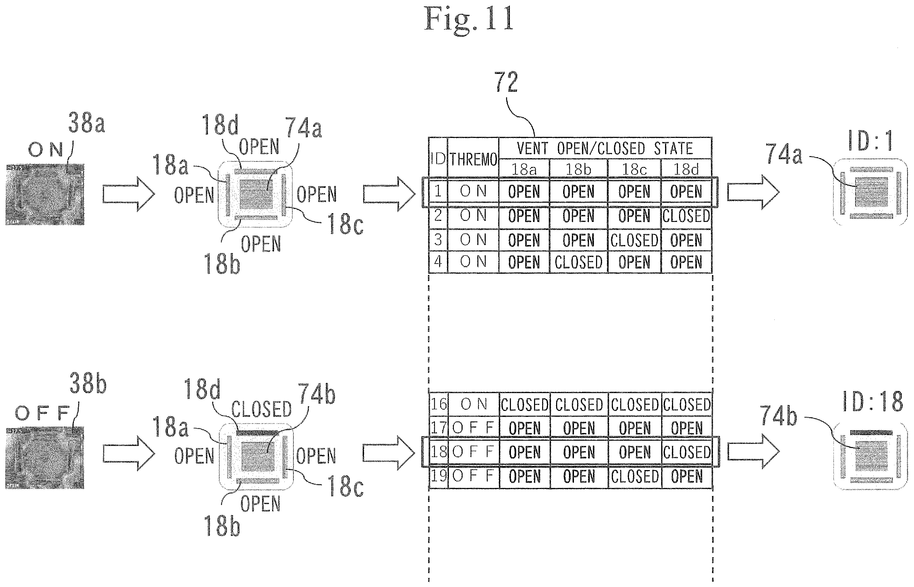

Fig. 11 is a diagram illustrating a procedure for checking the thermogram 38 and the visible image 74 described above against the table 72 and recognizing the ID numbers of the indoor air-conditioning units 10.

In Fig. 11, the thermo state of an indoor air-conditioning unit 10a in Fig. 9 is determined to be the ON state from a thermogram 38a captured by the infrared camera of the thermographic camera 34. Regarding the indoor air-conditioning unit 10a in Fig. 10, the vents 18a to 18d are all determined to be in the open state from a visible image 74a captured by the visible light camera of the thermographic camera 34. In Fig. 11, the table 72 is searched for this combination, and the ID number of the indoor air-conditioning unit 10a is determined to be "1".

Regarding an indoor air-conditioning unit 10b in Fig. 10, the thermo state of is determined to be the OFF state from the visible image 74 captured by the visible light camera of the thermographic camera 34. Regarding the indoor air-conditioning unit 10b of Fig. 10, the vent 18a is determined to be in the open state, the vent 18b is determined to be in the open state, the vent 18c is determined to be in the open state, and the vent 18d is determined to be in the closed state from a visible image 74b captured by the visible light camera of the thermographic camera 34. In Fig. 11, the table 72 is searched for this combination, and the ID number of the indoor air-conditioning unit 10b is determined to be "18".

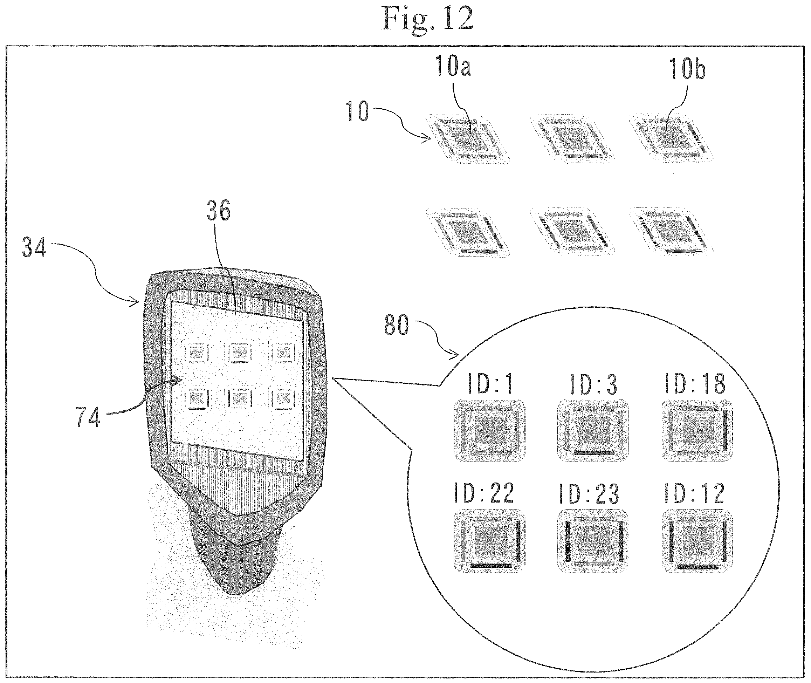

The results of determining the ID numbers of the indoor air-conditioning units 10 by the above procedure are displayed on the display unit 36 of the thermographic camera 34 for each of the indoor air-conditioning units 10, as illustrated in Fig. 12. A balloon 80 is an enlarged view of the display unit 36 of the thermographic camera 34, and the ID numbers are respectively displayed for the six indoor air-conditioning units 10.

At this time, the direction indication 42 or the position indication 44 of the piping 30 of each of the indoor air-conditioning units 10 may be synthesized and displayed, as described in Fig. 4, together with the ID number of each of the indoor air-conditioning units 10 on the display unit 36 of the thermographic camera 34 in Fig. 12.

When the number of the indoor air-conditioning units 10 is larger than 32 units, IDs having numbers larger than 32 may be given and used for searching by preparing more than one table 72 or increasing the number of rows in the table 72, as illustrated in Fig. 8.

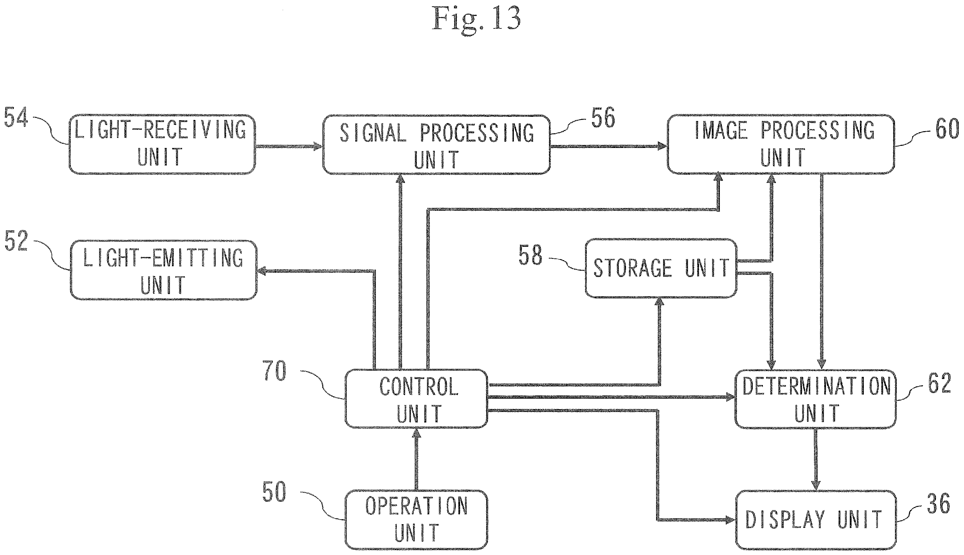

Fig. 13 is a functional block diagram of the indoor air-conditioning unit installation direction display device according to the fourth embodiment of the present invention, in which components that can be adapted from Fig. 5 are denoted by the same numbers as in Fig. 5.

The operator directs the infrared camera of the thermographic camera 34 at the indoor air-conditioning units 10 on the ceiling and operates the operation unit 50. Then, an operation signal is sent to the control unit 70, and the control unit 70 activates the light-emitting unit 52.

The light-emitting unit 52 emits infrared rays to the indoor air-conditioning units 10, which are the temperature measurement target objects. However, in the case of a model of a type in which infrared rays radiated from a temperature measurement target object are received by the light-receiving unit 54, the light-emitting unit 52 is not necessary.

The control unit 70 activates the light-receiving unit 54. The light-receiving unit 54 receives infrared rays radiated from the indoor air-conditioning units 10, or receives reflected infrared light of infrared light emitted by the light-emitting unit 52.

The control unit 70 activates the signal processing unit 56. The signal processing unit 56 performs photoelectric conversion on the infrared light received by the light-receiving unit 54 using a charge coupled device (CCD) sensor or the like, and converts the amount of energy of the infrared light into electrical energy and outputs the electrical energy.

The storage unit 58 stores the positional relationship of the four vents 18 (Fig. 2) in the indoor air-conditioning unit 10, and also stores the amount of electrical energy corresponding to the amount of energy of the infrared light output by the signal processing unit 56, temperature information, and color information in association with one another.

The control unit 70 calls up the above-described pieces of information from the storage unit 58 and activates the image processing unit 60. Based on the amount of electrical energy output by the signal processing unit 56 and the pieces of information called up from the storage unit 58, the image processing unit 60 generates a thermographic image by superimposing an infrared image of the indoor air-conditioning units 10, which are the temperature measurement target objects, and a color image based on temperatures. Then, the image processing unit 60 outputs the thermographic image.

The control unit 70 activates the determination unit 62. The determination unit 62 determines the thermo ON/OFF state of each of the indoor air-conditioning units 10 based on information in the thermographic image output by the image processing unit 60 and the relationship between color information of the thermogram 38 and the thermo ON/OFF state stored in the storage unit 58 (Fig. 5). Then, the control unit 70 outputs determination information.

The control unit 70 activates the display unit 36. The display unit 36 adds the determination information output by the determination unit 62 to the thermographic image output by the image processing unit 60, and displays the thermogram 38 and the thermo ON/OFF state on the liquid crystal screen.

Next, the operator directs the visible light camera of the thermographic camera 34 at the indoor air-conditioning units 10 on the ceiling and operates the operation unit 50. Then, an operation signal is sent to the control unit 70 and the control unit 70 activates the light-emitting unit 52.

The light-emitting unit 52 emits visible light to the indoor air-conditioning units 10, which are the temperature measurement target objects.

The control unit 70 activates the light-receiving unit 54. The light-receiving unit 54 receives reflected visible light of visible light reflected at the indoor air-conditioning units 10.

The control unit 70 activates the signal processing unit 56. The signal processing unit 56 performs photoelectric conversion on the visible light received by the light-receiving unit 54 using a charge coupled device (CCD) sensor or the like, and makes an output.

The storage unit 58 stores the positional relationship of the four vents 18 (Fig. 2) in the indoor air-conditioning unit 10, and also stores the relationship between the visible image 74 of the vane 20 and "open"/"closed" of the open/closed state.

The control unit 70 calls up the above-described pieces of information from the storage unit 58 and activates the image processing unit 60. The image processing unit 60 generates a visible image of the indoor air-conditioning units 10, which are the temperature measurement target objects, based on the signal output by the signal processing unit 56 and the pieces of information called up from the storage unit 58. Then, the control unit 70 outputs the generated visible image.

The control unit 70 activates the determination unit 62. The determination unit 62 determines the open/closed states of the vanes 20 of each of the indoor air-conditioning units 10, based on information in the visible image output by the image processing unit 60 and the relationship of the open/closed states of the vanes 20 stored in the storage unit 58 (Fig. 5). Then, the control unit 70 outputs determination information.

The display unit 36 adds the determination information output by the determination unit 62 to the visible image output by the image processing unit 60, and displays the visible image 74 and "open" or "closed" for each of the vanes 20 on the liquid crystal screen.

The storage unit 58 further stores, as the table 72, the relationship between the thermo ON/OFF state and the open/closed states of the vanes 20 of each of the indoor air-conditioning units 10 and ID information of each of the indoor air-conditioning units 10.

The control unit 70 re-activates the determination unit 62. The determination unit 62 searches the table 72 stored in the storage unit 58, based on the thermo ON/OFF state and the combination of the open/closed patterns of the vanes 20 of each of the indoor air-conditioning units 10. Then, the control unit 70 determines the ID number of each of the indoor air-conditioning units 10.

The control unit 70 activates the display unit 36. The display unit 36 additionally displays the ID numbers output by the determination unit 62 on the liquid crystal screen. Alternatively, the control unit 70 additionally displays the ID numbers output by the determination unit 62 on the visible image or thermographic image of the indoor air-conditioning units 10 output by the image processing unit 60.

Note that control of creating ON/OFF images for the thermographic image, control of creating images of open/closed states for the visible image, and control of creating an image of the indoor air-conditioning units 10 with added ID numbers may be performed in parallel.

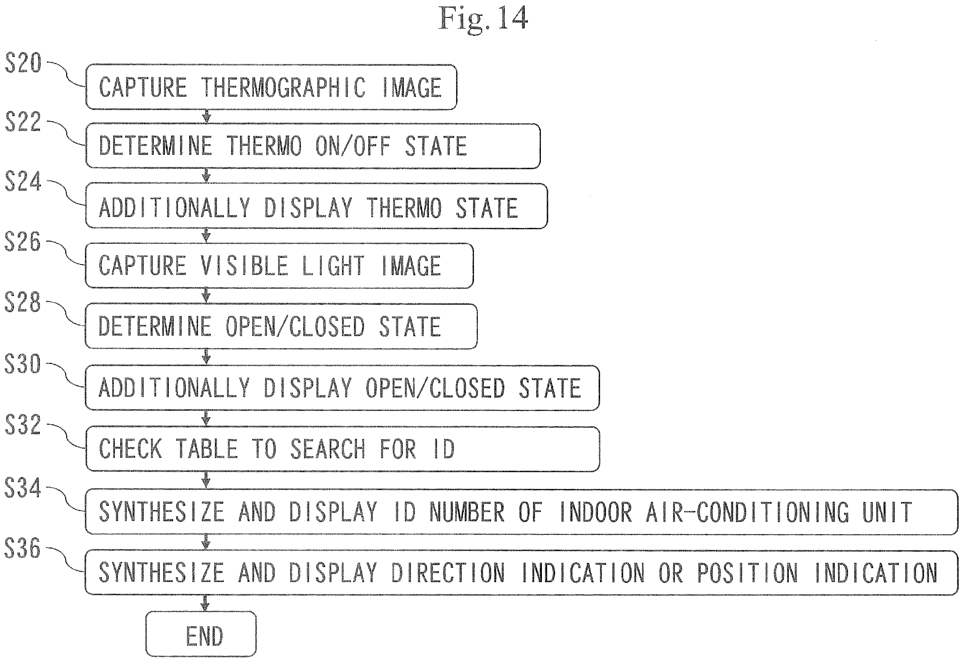

Fig. 14 is a flowchart illustrating a procedure for acquiring ID numbers using the indoor air-conditioning unit installation direction display device according to the fourth embodiment of the present invention.

In S20, the operator operates the operation unit 50 of the thermographic camera 34 and directs the thermographic camera 34 at the indoor air-conditioning units 10 on the ceiling. Then, infrared rays are received by the light-receiving unit 54 of the infrared camera and a thermographic image is captured, and the signal processing unit 56 converts the infrared rays into an electrical signal based on the amount of energy of the infrared rays. Then, the image processing unit 60 creates the thermogram 38, based on the relationship between the amount of energy of infrared rays and color information stored in the storage unit 58.

In S22, the control unit 70 activates the determination unit 62. The determination unit 62 determines whether the thermo state is ON or OFF for each of the indoor air-conditioning units 10, based on information in the thermogram 38 received from the image processing unit 60 and the relationship between color information of the thermogram 38 of the vents 18 (18a, 18b, 18c, and 18d) of the indoor air-conditioning unit 10 and the thermo ON/OFF state stored in the storage unit 58.

In S24, the control unit 70 activates the display unit 36 and additionally displays the thermo ON/OFF state on the thermogram 38.

Next, in S26, the operator operates the operation unit 50 of the thermographic camera 34 and directs the thermographic camera 34 at the indoor air-conditioning units 10 on the ceiling. Then, visible light is received by the light-receiving unit 54 of the visible light camera and a visible light image is captured, and the signal processing unit 56 converts the received visible light into an electrical signal, and the image processing unit 60 creates the visible image 74.

In S28, the control unit 70 activates the determination unit 62. Then, the determination unit 62 determines the open/closed states of the vents 18 (18a, 18b, 18c, and 18d) of the indoor air-conditioning unit 10 for each of the indoor air-conditioning units 10, based on information in the visible image 74 received from the image processing unit 60 and the relationship between the visible image 74 of the vane 20 and "open"/"closed" of the open/closed state stored in the storage unit 58.

In S30, the control unit 70 activates the display unit 36. The display unit 36 additionally displays the open/closed states of the vent 18a, the vent 18b, the vent 18c, and the vent 18d on the visible image 74.

Next, in S32, the operator operates the operation unit 50 of the thermographic camera 34. Then, the control unit 70 reads the table 72 from the storage unit 58, and checks the thermo state in the thermogram 38 and the open/closed states in the visible image 74 against the table 72 so as to search for a matching ID, as illustrated in Fig. 11.

In S34, the control unit 70 activates the display unit 36, and synthesizes and displays the ID numbers of the indoor air-conditioning units 10 on the thermogram 38 or the visible image 74.

In S36, the control unit 70 may synthesize and display the direction indication 42 or the position indication 44 of the piping 30 of each of the indoor air-conditioning units 10 on the display unit 36.

The above completes the processing flow.

The above flow may be processed through one operation on the operation unit 50 by the operator.

### (Fifth Embodiment)

A fifth embodiment is characterized in that the thermographic camera 34 or the smartphone 64 is equipped with a position detection function in addition to the aspects described in the first to fourth embodiments. The fifth embodiment assumes a case in which a large number of the indoor air-conditioning units 10 are installed in a large office and the attachment directions and ID numbers of all the indoor air-conditioning units 10 cannot be checked by capturing one image by the thermographic camera 34 or the smartphone 64. With this configuration, even when a large number of the indoor air-conditioning units 10 are installed in a large office, the attachment situation, ID number, and the like of each of the indoor air-conditioning units 10 can be determined and displayed.

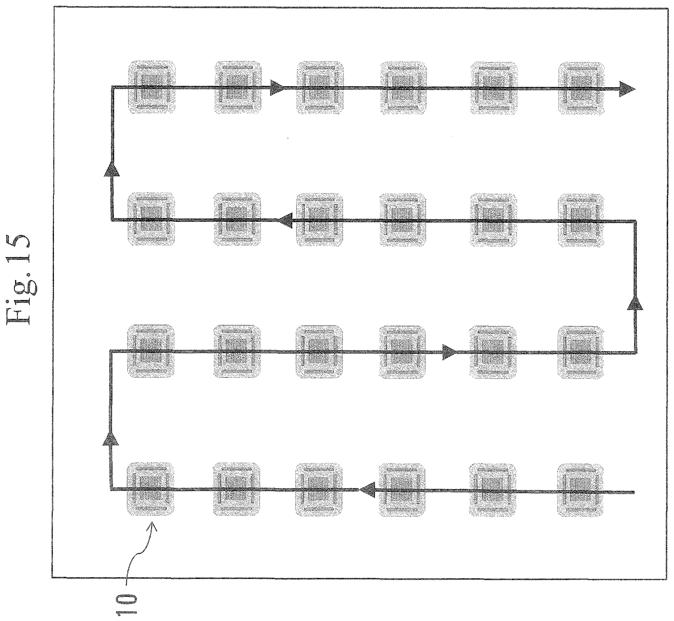

Fig. 15 is a diagram illustrating an example of usage of the indoor air-conditioning unit installation direction display device according to the fifth embodiment of the present invention.

In the fifth embodiment, as illustrated in Fig. 15, the number of the indoor air-conditioning units 10 installed in a room such as an office is so large that an image of all the indoor air-conditioning units 10 cannot be captured by capturing one image by the thermographic camera 34 or the smartphone 64.

The operator activates the position detection function of a position detection unit provided in the thermographic camera 34 or the smartphone 64 to be described later, and walks while holding the thermographic camera 34 or the smartphone 64 and captures images of the indoor air-conditioning units 10 one by one, as indicated by arrows, from below the indoor air-conditioning units 10.

At this time, the thermographic camera 34 or the smartphone 64 may regularly capture still images or capture a video.

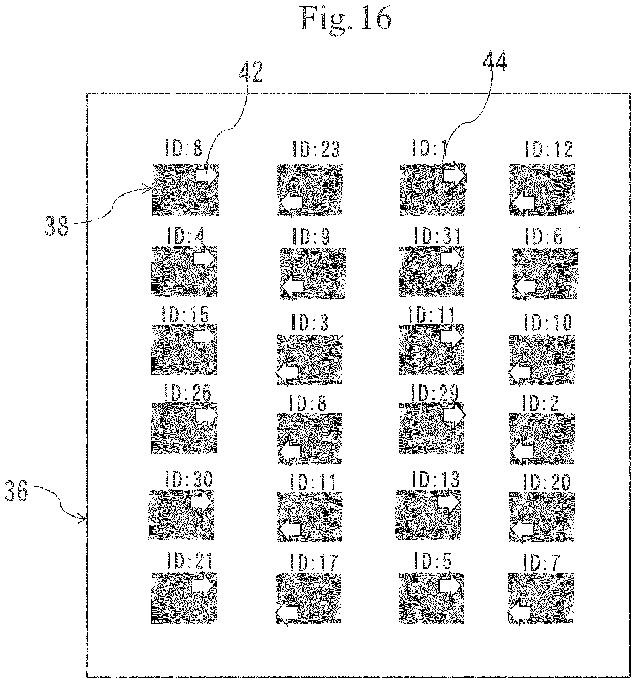

Fig. 16 is a diagram illustrating an example of display in the indoor air-conditioning unit installation direction display device according to the fifth embodiment of the present invention.

The thermograms 38 of images captured by the thermographic camera 34 or the smartphone 64 are obtained by the procedures described in the first to fourth embodiments, and the direction indications 42 and the position indications 44 are displayed on the display unit 36.

Note that the display unit 36 is not limited to the display of the thermographic camera 34 or the smartphone 64, and may be the display of a personal computer (PC) or the display of a control room.

The display unit 36 of the thermographic camera 34 or the smartphone 64 may display all the indoor air-conditioning units 10 at a time, or may sequentially display all the indoor air-conditioning units 10 by dividing them into groups of several units.

With this arrangement, even when a large number of the indoor air-conditioning units 10 are installed in a large office or the like, the operator can know the attachment direction, attachment position, and ID number of each of the indoor air-conditioning units. As a result, work efficiency can be improved.

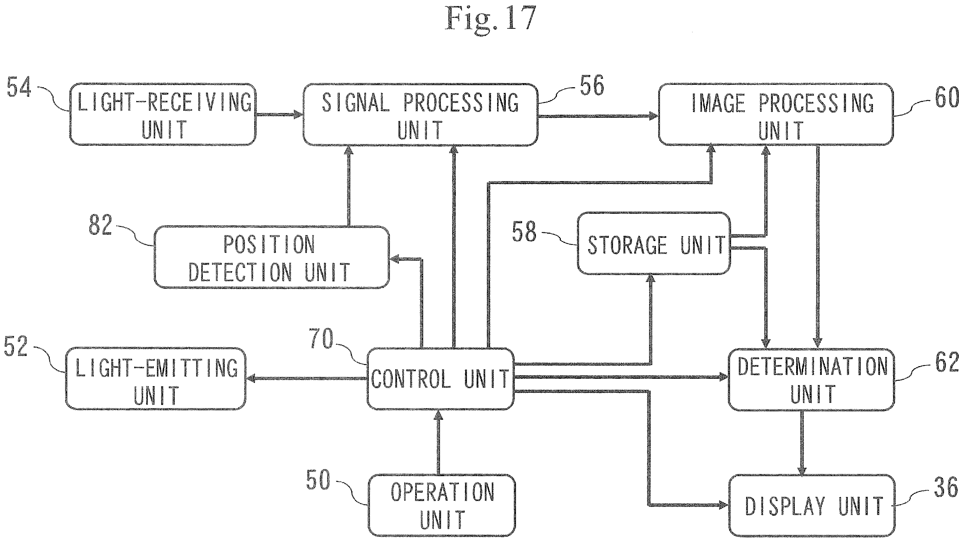

Fig. 17 is a control block diagram of the indoor air-conditioning unit installation direction display device according to the fifth embodiment of the present invention.

In the following, an example in which the thermographic camera 34 is used will be described. However, the smartphone 64 to which the infrared camera 66 is attached is also controlled in exactly the same manner.

In Fig. 17, the operator operates the operation unit 50 of the thermographic camera 34 and directs the thermographic camera 34 at the indoor air-conditioning units 10 on the ceiling. Then, infrared rays are received by the light-receiving unit 54 of the infrared camera and a thermographic image is captured, and the signal processing unit 56 converts the infrared rays into an electrical signal, based on the amount of energy of the received infrared rays.

In parallel with this control, the control unit 70 activates a position detection unit 82. The position detection unit 82 is constituted by an acceleration sensor or a gyroscope sensor (3-axis acceleration sensor), and measures the walking speed, walking position, position of a direction change, and the like of the operator by one of these sensors. Alternatively, the movement speed, position, position of a movement-direction change, and the like of the thermographic camera 34 held by the operator are measured.

The signal processing unit 56 creates information on a walking position of the operator, based on measurement information output by the position detection unit 82.

The image processing unit 60 receives from the signal processing unit 56 the electrical signal related to the thermographic image and the information on the walking position of the operator. Then, the image processing unit 60 identifies the positions of the indoor air-conditioning units 10, based on the relationship between the amount of energy of infrared rays and color information stored in the storage unit 58 and the information on the walking position of the operator, and creates the thermogram 38 in which position information of the indoor air-conditioning units 10 is added.

The control unit 70 activates the determination unit 62. The determination unit 62 determines whether the thermo state is ON or OFF for each of the indoor air-conditioning units 10, based on information in the thermogram 38 received from the image processing unit 60 and the relationship between color information of the thermogram 38 of the vents 18 (18a, 18b, 18c, and 18d) of the indoor air-conditioning unit 10 and the thermo ON/OFF state stored in the storage unit 58.

The control unit 70 activates the display unit 36 and additionally displays the thermo ON/OFF state on the thermogram 38.

Next, the control unit 70 activates the visible light camera. Visible light is received by the light-receiving unit 54 of the visible light camera and a visible light image is captured.

In parallel with this control, the control unit 70 activates the position detection unit 82. The position detection unit 82 measures the walking speed, walking position, position of a direction change, and the like of the operator.

The signal processing unit 56 converts information on the received visible light into an electrical signal by the signal processing unit 56, and creates position information of the indoor air-conditioning units 10 from the information of the walking position of the operator, based on the measurement information output by the position detection unit 82. Then, the signal processing unit 56 outputs the position information of the indoor air-conditioning units 10 together with visible light information.

The control unit 70 activates the image processing unit 60. The image processing unit 60 creates the visible image 74 by adding the position information of the indoor air-conditioning units 10 to the visible light information output by the signal processing unit 56.

The control unit 70 activates the determination unit 62. The determination unit 62 determines the open/closed states of the vents 18 (18a, 18b, 18c, and 18d) of the indoor air-conditioning unit 10 for each of the indoor air-conditioning units 10, based on information in the visible image 74 received from the image processing unit 60 and the relationship between the visible image 74 and "open"/"closed" of the open/closed state of the vane 20 stored in the storage unit 58.

The control unit 70 activates the display unit 36. The display unit 36 additionally displays the open/closed states of the vent 18a, the vent 18b, the vent 18c, and the vent 18d on the visible image 74.

Next, the operator operates the operation unit 50 of the thermographic camera 34. Then, the control unit 70 reads the table 72 from the storage unit 58, and checks the thermo state in the thermogram 38 and the open/closed states in the visible image 74 against the table 72 to search for a matching ID number, as illustrated in Fig. 11.

The control unit 70 activates the display unit 36, and synthesizes and displays the ID number of each of the indoor air-conditioning units 10 on the thermogram 38 or the visible image 74.

The control unit 70 may synthesize and display the direction indication 42 or the position indication 44 of the piping 30 of each of the indoor air-conditioning units 10 on the display unit 36.

The above flow may be processed through only one operation on the operation unit 50 by the operator.

Capturing of images and image processing by the visible light camera may be performed simultaneously in parallel with capturing of images and image processing by the infrared camera.

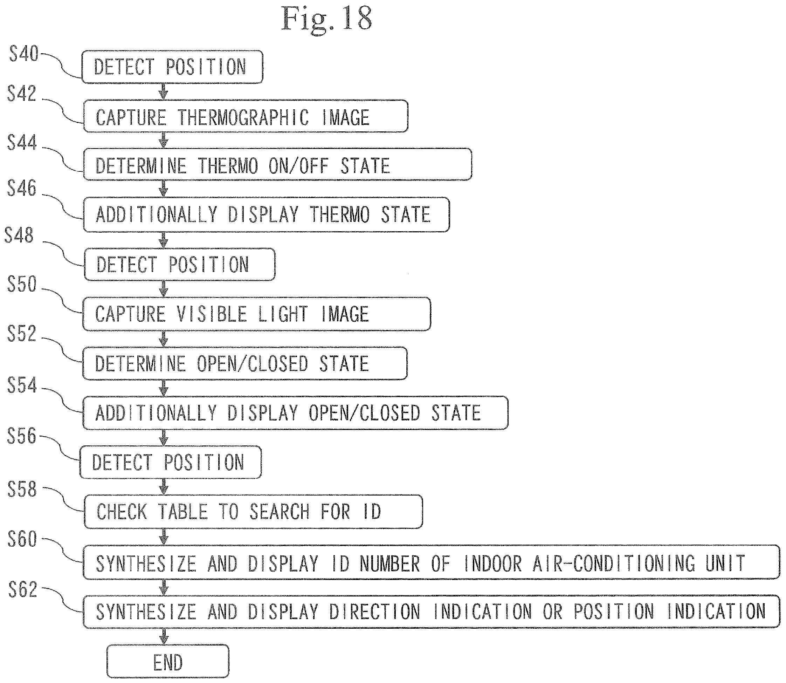

Fig. 18 is a flowchart illustrating a procedure for acquiring ID numbers using the indoor air-conditioning unit installation direction display device according to the fifth embodiment of the present invention.

In S40, the operator operates the operation unit 50 of the thermographic camera 34 and directs the thermographic camera 34 at the indoor air-conditioning units 10 on the ceiling. Then, the control unit 70 activates the position detection unit 82 and continuously measures the position of the thermographic camera 34.

In S42, the operator operates the operation unit 50 of the thermographic camera 34 and directs the thermographic camera 34 at the indoor air-conditioning units 10 on the ceiling. Then, infrared rays are received by the light-receiving unit 54 of the infrared camera and a thermographic image is captured, and the signal processing unit 56 converts the infrared rays into an electrical signal, based on the amount of energy of the received infrared rays. Then, the image processing unit 60 creates the thermogram 38, based on the relationship between the amount of energy of infrared rays and color information stored in the storage unit 58.

In S44, the control unit 70 activates the determination unit 62. The determination unit 62 determines whether the thermo state is ON or OFF for each of the indoor air-conditioning units 10, based on information in the thermogram 38 received from the image processing unit 60 and the relationship between color information of the thermogram 38 of the vents 18 (18a, 18b, 18c, and 18d) of the indoor air-conditioning unit 10 and the thermo ON/OFF state stored in the storage unit 58.

In S46, the control unit 70 activates the display unit 36, and additionally displays the thermo ON/OFF state on the thermogram 38.

Next, in S48, the control unit 70 further activates the position detection unit 82 and continuously measures the position of the thermographic camera 34.

In S50, visible light is received by the light-receiving unit 54 of the visible light camera, and a visible light image is captured. Then, the signal processing unit 56 converts the received visible light into an electrical signal, and the image processing unit 60 creates the visible image 74.

In S52, the control unit 70 activates the determination unit 62. The determination unit 62 determines the open/closed states of the vents 18 (18a, 18b, 18c, and 18d) of the indoor air-conditioning unit 10 for each of the indoor air-conditioning units 10, based on information in the visible image 74 received from the image processing unit 60 and the relationship between the visible image 74 of the vane 20 and "open"/"closed" of the open/closed state stored in the storage unit 58.

In S54, the control unit 70 activates the display unit 36. The display unit 36 additionally displays the open/closed states of the vent 18a, the vent 18b, the vent 18c, and the vent 18d on the visible image 74.

Next, in S56, the control unit 70 further activates the position detection unit 82 and continuously measures the position of the thermographic camera 34.

In S58, the control unit 70 reads the table 72 from the storage unit 58, and checks the thermo state in the thermogram 38 and the open/closed states in the visible image 74 against the table 72 so as to search for a matching ID, as illustrated in Fig. 11.

In S60, the control unit 70 activates the display unit 36, and synthesizes and displays the ID number of each of the indoor air-conditioning units 10 on the thermogram 38 or the visible image 74.

In S62, the control unit 70 may synthesize and display the direction indication 42 or the position indication 44 of the piping 30 of each of the indoor air-conditioning units 10 on the display unit 36.

The above completes the processing flow.

The above flow may be processed through only one operation on the operation unit 50 by the operator.

### Reference Signs List

10: indoor air-conditioning unit, 12: main body housing, 14: decorative panel, 16: inlet grill, 18: vent, 20: vane, 22: fan, 24: heat exchanger, 26: gas pipe, 28: liquid pipe, 30: piping, 32: passage, 34: indoor air-conditioning unit installation direction display device (thermographic camera), 36: display (display unit), 38: thermogram, 40: temperature graph, 42: direction indication, 44: position indication, 46: end, 48: end, 50: operation unit, 52: light-emitting unit, 54: light-receiving unit, 56: signal processing unit, 58: storage unit, 60: image processing unit, 62: determination unit, 64: smartphone, 66: infrared camera, 68: connection terminal, 70: control unit, 72: table, 74: visible image, 76: balloon, 78: balloon, 80: balloon, 82: position detection unit

## Claims

1. An indoor air-conditioning unit installation direction display device that displays an installation direction of an indoor air-conditioning unit in which a plurality of vents are provided at positions that can be visually recognized from outside of a decorative panel, the indoor air-conditioning unit installation direction display device comprising:
a temperature measurement unit to measure temperatures of the plurality of vents; and
a display unit to display each of the vents measured by the temperature measurement unit in a color pattern corresponding to a temperature of each of the vents, and thereby to display, as the installation direction of the indoor air-conditioning unit, a direction derived from an installation position of one of the vents that is displayed in a highest-temperature color pattern and an installation position of one of the vents that is displayed in a lowest-temperature color pattern.

2. The indoor air-conditioning unit installation direction display device according to claim 1,
wherein the indoor air-conditioning unit is further provided with piping for supplying a refrigerant to a heat exchanger from an outside and discharging the refrigerant from the heat exchanger to the outside, the piping being provided inside the decorative panel, and
wherein the installation direction of the indoor air-conditioning unit is a direction in which the piping extends from the indoor air-conditioning unit to the outside.

3. The indoor air-conditioning unit installation direction display device according to claim 1 or claim 2,
wherein the temperature measurement unit is a thermographic camera.

4. The indoor air-conditioning unit installation direction display device according to claim 3,
wherein the temperature measurement unit is further equipped with a visible light camera, and
wherein the display unit additionally displays the installation direction of the indoor air-conditioning unit on an image created by superimposing an image captured by the thermographic camera and an image captured by the visible light camera.

5. The indoor air-conditioning unit installation direction display device according to claim 1 or claim 2,
wherein the temperature measurement unit is an imaging device that is embedded in a smartphone and is activated by activating application software installed in the smartphone.

6. The indoor air-conditioning unit installation direction display device according to claim 5,
wherein the imaging device embedded in the smartphone is a visible light camera, and
wherein when a thermographic camera is connected to the indoor air-conditioning unit installation direction display device, the display unit additionally displays the installation direction of the indoor air-conditioning unit on an image created by superimposing an image captured by the thermographic camera and an image captured by the visible light camera.

7. The indoor air-conditioning unit installation direction display device according to claim 1, claim 2, claim 3, claim 5, or claim 6, further comprising:
an imaging unit to capture a visible image;
a storage unit to store, as a table, a combination of an ID number of the indoor air-conditioning unit and a combination of a thermo ON/OFF state of the indoor air-conditioning unit and open/closed states of the vents of the indoor air-conditioning unit; and
a determination unit to determine a thermo ON/OFF state of the indoor air-conditioning unit based on a visible image captured by the imaging unit, determine an open/closed state of each of the vents of the indoor air-conditioning unit based on a temperature of each of the vents measured by the temperature measurement unit, and determine an ID number of the indoor air-conditioning unit by checking the table in the storage unit,
wherein the display unit displays the thermo ON/OFF state, or displays the open/closed state at each of the vents of the indoor air-conditioning unit, or displays the ID number individually for the indoor air-conditioning unit, on a visible image of the indoor air-conditioning unit.

8. The indoor air-conditioning unit installation direction display device according to claim 7, further comprising
a position detection unit to measure a movement speed, a position, and a position of a movement-direction change of the indoor air-conditioning unit installation direction display device.

9. The indoor air-conditioning unit installation direction display device according to claim 8,
wherein the position detection unit is constituted by one of an acceleration sensor and a gyroscope sensor.
